Europäisches Patentamt

European Patent Office

Office européen des brevets

(11) Veröffentlichungsnummer: **0 088 984**
B1

# EUROPÄISCHE PATENTSCHRIFT

(45) Veröffentlichungstag der Patentschrift:
24.07.85

(51) Int. Cl.⁴: **E 03 C 1/042**

(21) Anmeldenummer: 83102244.7

(22) Anmeldetag: 08.03.83

(54) **Unterputz-Ventil.**

(30) Priorität: 11.03.82 DE 3208709

(43) Veröffentlichungstag der Anmeldung:
21.09.83 Patentblatt 83/38

(45) Bekanntmachung des Hinweises auf die Patenterteilung:
24.07.85 Patentblatt 85/30

(84) Benannte Vertragsstaaten:
AT BE CH DE FR GB IT LI LU NL SE

(56) Entgegenhaltungen:
DE - B - 1 500 030
DE - C - 2 757 315
DE - U - 1 994 901

(73) Patentinhaber: **FRIEDRICH GROHE ARMATURENFABRIK GmbH & CO**, Hauptstrasse 137, D-5870 Hemer 1 (DE)

(72) Erfinder: **Grendel, Vinzenz**, Friedensstrasse 5, D-5870 Hemer 1 (DE)
Erfinder: **Geipel, Werner**, Zur Sonnenhöhe 81, D-5860 Iserlohn (DE)

## Beschreibung

Die Erfindung betrifft ein Unterputz-Ventil mit den im Oberbegriff des Anspruchs 1 angegebenen Merkmalen. Ein Ventil dieser Gattung ist aus der DE-C Nr. 2757315 bekannt. Bei dieser Ventilausbildung ist es jedoch erforderlich, das im Ventilgehäuse angeordnete Ventiloberteil mit einer beson-ders ausgebildeten Betätigunsspindel zu verse-hen. Ausserdem ist nur die Anordnung eines knebelförmigen Betätigungssgriffs vorgesehen.

Der Erfindung liegt die Aufgabe zugrunde, eine Unterputz-Ventilausbildung zu schaffen, bei der genormte Ventiloberteile eingesetzt werden können, und dass darüber hinaus die gebräuchlichen Betätigungsgriffe mit einfachen Mitteln an dem aus dem verputzten Mauerwerk vorstehenden Teil befestigt werden können.

Diese Aufgabe wird erfindungsgemäss durch die im kennzeichnenden Teil des Anspruchs 1 an-gegebenen Merkmale gelöst. Weitere Ausgestal-tungen der Erfindung sind in den Ansprüchen 2 bis 5 angegeben.

Die mit der Erfindung erzielten Vorteile bestehen insbesondere darin, dass das Unterputz-Ventil mit einem in sehr grosser Stückzahl hergestellten Nor-malventiloberteil versehen werden kann. Zweck-mässig wird hierbei die Schutzhülse als zylindrisches, metallenes Rohr mit einem durchgehenden Innengewinde und einer verchromten äusseren Mantelfläche ausgebildet, während die Hohlspindel vorteilhaft aus Kunststoff extrudiert werden kann.

Zum Schutz gegen den rauhen Baustellenbetrieb kann die Schutzhülse mit ihrer veredelten Oberfläche mit einer Abdeckkappe aus Kunststoff, Hartpappe etc. versehen werden, wobei vorteilhaft auf der Abdeckkappe eine Skala für den Ablängvorgang angeordnet werden kann.

Nach dem Einputzen des mit der Abdeckhaube gekapselten Unterputz-Ventils kann mit einem Trennwerkzeug mit einem einzigen Schnitt die Schutzhülse mit der Hohlspindel auf die optimale Vorkragung abgelängt werden und anschliessend durch einen einfachen Schraubvorgang ein Endstück mit zugehörigem Betätigungsgriff die Feininstallation abschliessen.

Durch eine unterschiedliche Ausbildung des Endstücks können sowohl knebelförmige als auch haubenförmige Betätigungsgriffe mit einfachsten Mitteln an dem Unterputz-Ventil eingesetzt werden.

Ausführungsbeispiele der Erfindung sind in der Zeichnung dargestellt und werden im folgenden näher erläutert. Es zeigt:

Fig. 1 ein gekapseltes Unterputz-Ventil vor der Installation teilweise im Schnitt dargestellt;

Fig. 2 einen sichtbaren Teil des Unterputz-Ventils mit einem knebelförmigen Betätigungsgriff nach der Fertiginstallation im Längsschnitt;

Fig. 3 einen sichtbaren Teil des Unterputz-Ventils mit einem haubenförmigen Betätigungsgriff nach der Fertiginstallation im Längsschnitt.

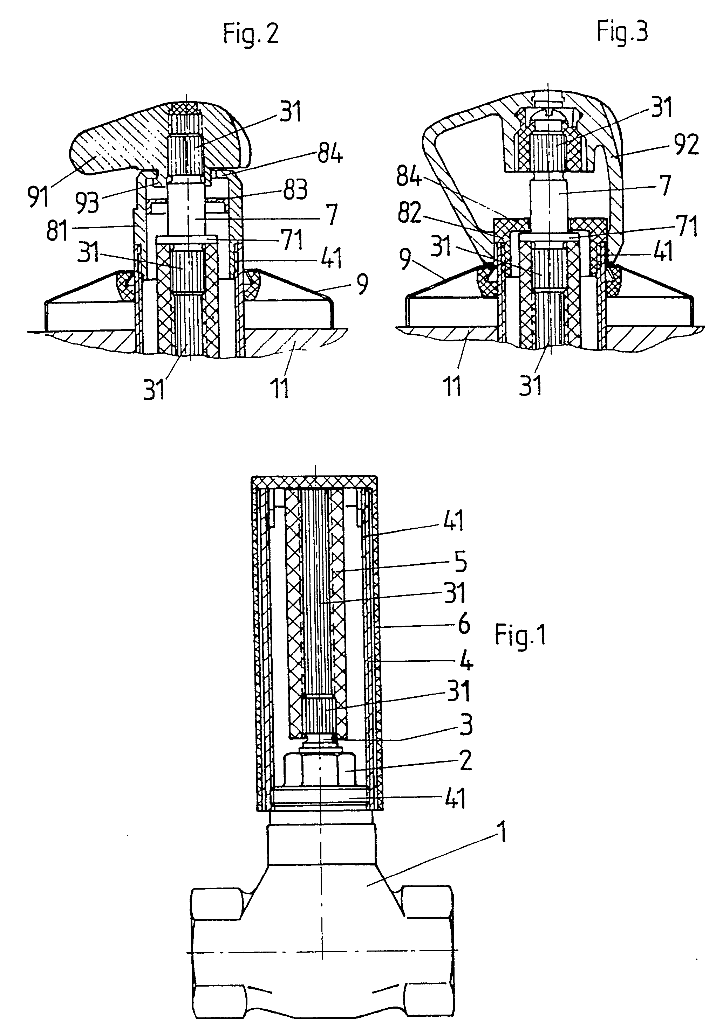

Der Einfachheit halber sind bei den beiden Ausführungsbeispielen der Zeichnung gleiche oder entsprechende Elemente mit jeweils gleichen Bezugszeichen versehen. Das in der Fig. 1 gezeigte Unterputz-Ventil besteht aus einem Ventilgehäuse 1 mit Anschlüssen für die Versorgungsleitung und einem Normalventiloberteil. Das Ventiloberteil ist mit einem Oberteilgehäuse 2 in dem Ventilgehäuse 1 eingeschraubt, wobei koaxial aus dem Oberteilgehäuse eine Betätigungsspindel 3 mit Längsriefen 31 herausgeführt ist. Auf dem Ventiloberteilgehäuse ist eine Schutzhülse 4 mit durchgehendem Innengewinde 41 aufgeschraubt, während auf der Betätigungsspindel 3 eine Hohlspindel 5 mit entsprechenden Längsriefen drehfest aufgesteckt ist. Um Beschädigungen der veredelten Oberfläche der Schutzhülse 4 zu vermeiden und das Eindringen von Baustoffen in die Schutzhülse auszuschliessen, ist eine topfförmige Abdeckkappe 6 über der Schutzhülse angeordnet. Auf der Mantelfläche der Abdeckkappe ist ausserdem für den nach der Installation erforderlichen Ablängvorgang eine Skala ausgebildet.

Das so gekapselte Unterputz-Ventil kann nunmehr im Mauerwerk installiert werden und im Anschluss können gefahrlos die erforderlichen Verputzungs- und/oder Fliesenlegungsarbeiten durchgeführt werden. Die aus der Putzschicht 11 vorstehende Abdeckkappe 6 mit der Schutzhülse 4 und der Hohlspindel 5 kann nunmehr mit einem Trennwerkzeug unter Berücksichtigung der individuellen Einbautiefe des Unterputz-Ventils auf die optimale Vorkragung abgelängt werden. Nachdem der verbliebene überschüssige Teil der Abdeckkappe 6 von der vorkragenden Schutzhülse 4 entfernt worden ist, kann eine Rosette 9 übergeschoben und der gewünschte Betätigungsgriff 91, 92 mit einem Endstück 81, 82 in das Gewinde 41 eingeschraubt werden, wobei die Kupplung des Griffstücks mit Hilfe einer Verbindungsspindel 7 erfolgt.

In der Fig. 2 ist die Anordnung eines knebelförmigen Betätigungsgriffs 91 gezeigt. Hierbei ist ein hülsenförmiges Endstück 81 in das Gewinde 41 eingeschraubt. An der vorstehenden Stirnseite ist ein Kragen 84 für die Exzenterhalterung 93 des Betätigungsgriffs 91 ausgebildet. Die Kupplung des Betätigungsgriffs mit der Betätigungsspindel 3 erfolgt mit Hilfe einer Verbindungsspindel 7, deren Endbereiche mit Längsriefen 31 zur drehfesten Verbindung versehen sind. Zur Axialsicherung ist an der Verbindungsspindel 7 ein Ringbund 71 als Anschlag für die Hohlspindel 5 ausgebildet. Da die Exzenterhalterung 93 eine radiale Führung der Verbindungsspindel 7 nicht ermöglicht, ist ein gesondertes Radiallager 83 im Endstück 81 angeordnet.

In der Fig. 3 ist der sichtbare Teil des Unterputz-Ventils mit einem haubenförmigen Betätigungsgriff gezeigt. Als Abschluss der vorkragenden Schutzhülse ist ein stopfenförmiges Endstück 82 in das Gewinde 41 eingeschraubt. An der vorstehenden Stirnseite ist hierbei ein Kragen 84 ausgebildet, der als Radiallager der Verbindungsspindel 7 dient und ausserdem durch den Ringbund 71 die Axialsicherung gewährleistet. Der haubenförmige Betätigungsgriff 92 ist dabei mit einer bekannten Schnappverbindung über die Längsriefen 31 mit der Betätigungsspindel 3 verbunden. Die Mantelfläche des vorstehenden Endstücks 82 dient ausserdem als Stützlager für den Betätigungsgriff 92.

## Patentansprüche

1. Unterputz-Ventil, insbesondere für den Sanitärbereich, mit einem Anschlussöffnungen für die Versorgungsleitung aufweisenden Ventilgehäuse sowie einem Ventiloberteil mit Betätigungsspindel (3) und einer mit dem Ventil verbundenen, die Spindel umgebenden Schutzhülse (4), an der ein mit der Spindel gekuppelter Betätigungsgriff (91, 92) drehbar gehaltert ist, dadurch gekennzeichnet, dass auf der Betätigungsspindel (3) eine Hohlspindel (5) drehfest gehalten und die Schutzhülse (4) mit durchgehendem Gewinde (41) an dem Oberteilgehäuse (2) befestigt ist, so dass die Hohlspindel und die Schutzhülse nach der Installation und dem Aufbringen des Putzes bzw. der Fliesen etc. zusammen auf ein bestimmtes Vorkragmass ablängbar sind, wobei am vorstehenden Ende der Schutzhülse ein einschraubbares Endstück (81, 82) vorgesehen ist, das den mittels einer Verbindungsspindel (7) mit der Hohlspindel drehfest gekuppelten Betätigungsgriff (91, 92) haltert.

2. Unterputz-Ventil nach Anspruch 1, dadurch gekennzeichnet, dass die bei der Installation vorstehende, an der Oberfläche veredelte Schutzhülse (4) mit einer abnehmbaren Abdeckkappe (6) versehen ist.

3. Unterputz-Ventil nach Anspruch 2, dadurch gekennzeichnet, dass auf dem Mantel der Abdeckkappe (6) eine Skala für die Ablängung angeordnet ist.

4. Unterputz-Ventil nach Anspruch 1, dadurch gekennzeichnet, dass ein stopfenförmiges Endstück (82) vorgesehen ist, das mit einem Kragen (84) ein Radial- und Axiallager für die mit einem Ringbund (71) zwischen Hohlspindel (5) und Endstück versehene Verbindungsspindel (7) bildet und dessen äussere Mantelfläche als radiales Stützlager für einen haubenförmigen Betätigungsgriff (92) dient.

5. Unterputz-Ventil nach Anspruch 1, dadurch gekennzeichnet, dass ein hülsenförmiges Endstück (81) an der vorstehenden Stirnseite mit einem Kragen (84) zur Axialhalterung eines knebelförmigen Betätigungsgriffes (91) mit Exzenterhalterung (93) versehen ist und die mit einem Ringbund (71) als Anschlag an der Hohlspindel (5) versehene Verbindungsspindel (7) mit einem weiteren Radiallager (83) in dem Endstück geführt ist.

## Claims

1. Concealed valve, especially for use in sanitary installations, having a valve housing which has connection apertures for the supply pipe and having a valve head which has an operating spindle (3) and a protective sleeve (4) which is attached to the valve and surrounds the spindle and on which an operating handle (91, 92) which is coupled to the spindle is rotatably mounted, characterised in that a hollow spindle (5) is mounted on the operating spindle (3) to rotate therewith and the protective sleeve (4) having a continuous thread (41) is fastened to the valve head housing (2) so that, after installation and after plaster or tiles etc. have been applied, the hollow spindle and the protective sleeve can be cut together to project a specific length, there being provided on the protruding end of the protective sleeve an end piece (81, 82) which can be screwed in and which supports the operating handle (91, 92) which, by means of a connecting spindle (7), is coupled to the hollow spindle to rotate therewith.

2. Concealed valve according to Claim 1, characterised in that the protective sleeve (4), which protrudes when installed and has a finished surface, is provided with a removable cap (6).

3. Concealed valve according to Claim 2, characterised in that a scale is provided on the casing of the cap (6) for the operation of cutting to length.

4. Concealed valve according to Claim 1, characterised in that a stopper-shaped end piece (82) is provided which, with a collar (84), forms a radial and axial bearing for the connecting spindle (7) which has a ring collar (71) between the hollow spindle (5) and the end piece, and the outer surface of the end piece serves as a radial support bearing for a hood-shaped operating handle (92).

5. Concealed valve according to Claim 1, characterised in that a tube-shaped end piece (81) is provided with a collar (84) on its protruding end face to give axial support to a toggle-shaped operating handle (91) having an eccentric holding means (93), and the connecting spindle (7) provided with a ring collar (71) as a limit stop on the hollow spindle (5) is guided in the end piece by another radial bearing (83).

## Revendications

1. Soupape à encastrer, notamment pour le domaine des appareils sanitaires, comportant un boîtier de soupape pourvu d'orifices de raccordement pour la conduite d'alimentation, ainsi qu'une partie supérieure avec une tige de manœuvre (3) et un manchon de protection (4) entourant la tige et relié à la soupape, manchon sur lequel est fixé, en pouvant tourner, une poignée de manœuvre (91, 92) accouplée avec la tige, soupape caractérisée en ce que sur la tige de manœuvre (3) est fixée sans pouvoir tourner une tige creuse (5) et le manchon de protection (4) est fixé par un filetage continu (41) au boîtier (2) de la partie supérieure, de telle sorte que la tige creuse et le manchon de protection peuvent être mis à longueur après l'installation et l'application du revêtement ou des carreaux à une dimension de saillie déterminée, tandis qu'à l'extrémité saillante du manchon de protection, il est prévu une pièce terminale (81, 82) filetée, qui porte la poignée de manœuvre (91, 92) accouplée sans pouvoir tourner, au moyen d'une tige de liaison (7), avec la tige creuse.

2. Soupape selon la revendication 1, caractérisée en ce que le manchon de protection (4) pourvu d'un bon aspect sur sa surface extérieure et faisant saillie lors de l'installation est muni d'une calotte de recouvrement (6) amovible.

3. Soupape selon la revendication 2, caractérisée en ce que sur la surface latérale de la calotte de recouvrement (6) il est prévu une échelle pour la mise à longueur.

4. Soupape selon la revendication 1, caractérisée en ce qu'il est prévu une pièce terminale (82) en forme de bouchon, qui forme avec un collet (84) un logement radial et axial pour la tige de liaison (7) pourvue d'un collet annulaire (71) entre la tige creuse (5) et la pièce terminale, et dont la surface latérale extérieure sert d'appui radial à une poignée de manœuvre (92) en forme de calotte.

5. Soupape selon la revendication 1, caractérisée en ce qu'une pièce terminale (81) en forme de manchon est pourvue sur sa face frontale en saillie d'un collet (84) pour la fixation axiale d'une poignée de manœuvre (91) en forme de manette comportant une fixation excentrée (93) pour son maintien, la tige de liaison (7) pourvue d'un collet annulaire (71) servant de butée à la tige creuse (5) étant guidée dans la pièce terminale par un autre palier radial (83).

Fig. 2

Fig. 3

Fig. 1